# FASCICULE DE BREVET EUROPEEN

(11) **EP 1 902 869 B1**
(45) Date de publication et mention de la délivrance du brevet: **11.05.2011**
(21) Numéro de dépôt: 06120894.8
(22) Date de dépôt: 19.09.2006
(51) Int. Cl.: B60C 23/04, B60C 23/20

(54) **Procédé de vérification du bon fonctionnement d'un transpondeur monté sur une roue de véhicule**
Verfahren zur Prüfung der Betriebsfähigkeit eines an einem Kraftfahrzeugsrad eingebauten Transponders
Method for checking the operating of a transponder of a vehicle wheel

(43) Date de publication de la demande: 26.03.2008
(73) Titulaire: EM Microelectronic-Marin SA, 2074 Marin (CH)
(72) Inventeur: Randjelovic, Zoran, 2074 Marin (CH); Descombes, Arthur, 3210 Kerzers (CH); Degrauwe, Marc, 2025 Chez-le-Bart (CH)
(74) Mandataire: Vigand, Philippe

(56) Documents cités:
- EP-A- 1 388 439
- FR-A- 2 874 086
- US-A- 5 540 092

## Description

### DOMAINE TECHNIQUE

La présente invention concerne, de manière générale un procédé de vérification du bon fonctionnement d'un transpondeur après la détection du franchissement d'un seuil dit de surchauffe. L'invention concerne plus particulièrement la mise en oeuvre de ce procédé dans une application où le transpondeur est monté sur un mobile en rotation d'un véhicule, du type véhicule automobile.

### ARRIERE-PLAN TECHNOLOGIQUE

Il est connu dans l'art antérieur, tel que le document EP 1 388 439, en accord avec le préambule des revendications 1 et 9, des systèmes de contrôle de pression des pneumatiques dans un véhicule automobile. De tels systèmes comprennent un transpondeur monté sur une roue, soit sur la jante, soit sur le pneumatique directement, associé à un capteur de pression permettant d'effectuer des mesures de la pression des pneumatiques. Ces systèmes comprennent encore un lecteur associé au transpondeur qui permet de communiquer avec ce dernier, et qui est généralement agencé dans le véhicule avec l'électronique de bord. Enfin, le système comprend généralement un indicateur pour avertir l'utilisateur du véhicule lorsque la pression de l'un des pneumatiques n'est pas conforme aux valeurs requises.
Il est également connu du brevet FR 2 874 086 un procédé de surveillance d'un dispositif capteur agencé sur une roue d'un véhicule. Ce dispositif capteur comprend un capteur d'accélération envoyant un signal d'accélération vers une unité de calcul du véhicule. Cette unité de calcul est alors capable de détecter si le dispositif capteur est détaché ou non de la roue, en fonction du signal d'accélération.

Néanmoins, un tel système de contrôle de pression des pneumatiques d'un véhicule peut connaître quelques soucis de fiabilité lors de circonstances particulières, en particulier lors d'un échauffement important d'un pneumatique. En effet, il a été constaté lors de circonstances de conduite particulières, par exemple lors d'un freinage d'urgence, que la température des pneumatiques pouvaient subir une augmentation très importante et endommager le transpondeur agencé dessus, les mesures de pression subséquentes n'étant alors plus fiables.

### RESUME DE L'INVENTION

L'un des buts principaux de la présente invention est de pallier aux inconvénients susmentionnés. A cet effet, la présente invention concerne un procédé de vérification du bon fonctionnement d'un transpondeur monté sur un élément mobile en rotation d'un véhicule comprenant les étapes définies à la revendication 1. Ce procédé de vérification présente en particulier l'avantage de poser un diagnostic sur l'état du transpondeur suite à la détection du franchissement d'un seuil de surchauffe déterminé.

Des variantes avantageuses de mise en oeuvre de ce procédé de vérification font l'objet des revendications dépendantes.

### BREVE DESCRIPTION DES FIGURES

D'autres caractéristiques et avantages de la présente invention apparaîtront plus clairement à la lecture de la description détaillée qui suit de modes de réalisation de l'invention donnés uniquement à titre d'exemple non limitatif et illustrés par le dessin annexé où :
- la figure 1 est une vue schématique de l'implémentation d'un système lecteur/transpondeur dans un véhicule automobile;
- la figure 2 est un diagramme des différentes étapes du procédé de vérification du transpondeur selon une première variante de mise en oeuvre;
- la figure 3 est un diagramme des différentes étapes du procédé de vérification du transpondeur selon une deuxième variante de mise en oeuvre.

### DESCRIPTION DETAILLEE DE L'INVENTION

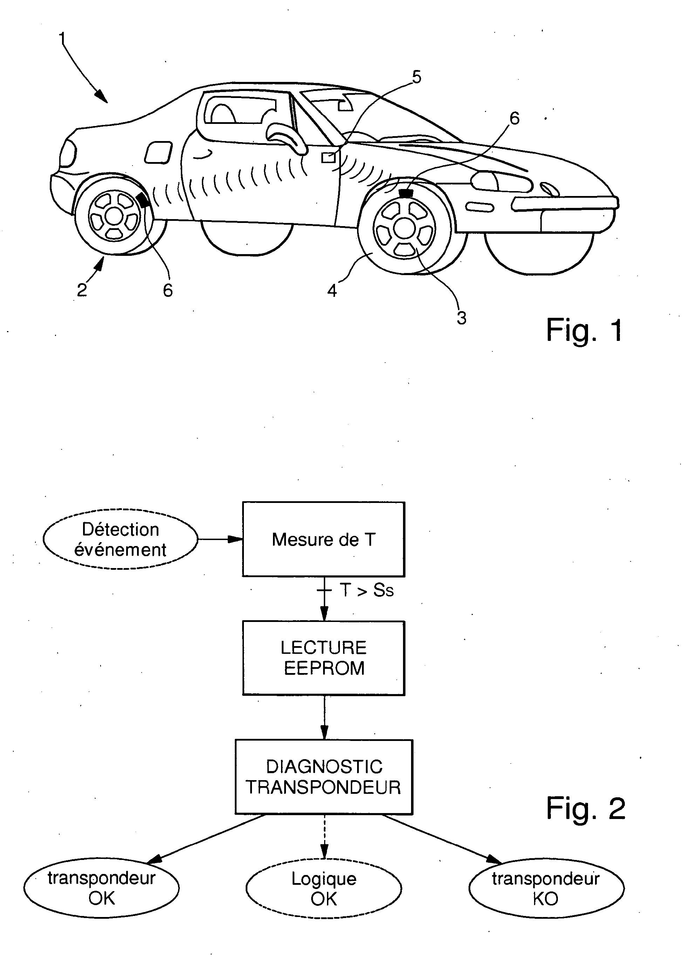

La figure 1 est une vue schématique d'un véhicule automobile comprenant un système lecteur/transpondeur pour contrôler la pression des pneumatiques du véhicule. Il est bien évidemment que la description qui va suivre reste valable pour tout autre véhicule mobile monté sur des éléments mobiles en rotation pour mouvoir le véhicule et susceptibles d'incorporer un transpondeur, comme par exemple, une motocyclette, un avion, etc...

Selon l'exemple représenté à la figure 1, le véhicule automobile 1 est monté sur un certain nombre d'éléments mobiles en rotation ou roues 2 pour mouvoir le véhicule. Ces roues 2 sont traditionnellement constituées d'une jante 3 sur laquelle est monté un pneumatique 4 gonflé avec une certaine valeur de pression. Le véhicule 1 est en outre équipé d'un système lecteur/transpondeur(s), le lecteur 5 étant agencé dans le véhicule, par exemple avec l'ordinateur de bord, tandis qu'un transpondeur 6 est monté sur au moins une roue 2 et préférentiellement sur chacune des roues 2. Chaque transpondeur 6 peut être monté soit sur la jante, soit directement sur le pneumatique 4 de la roue 2. Ces transpondeurs ont pour but de fournir des informations concernant la roue à l'ordinateur de bord du véhicule via le lecteur 5 qui est adapté spécialement pour communiquer avec le ou les transpondeurs par exemple par transmission radiofréquence. Une fonction connue consiste à vérifier la pression des pneumatiques 4. A cet effet, chaque transpondeur 6 est pourvu d'un capteur de pression permettant de mesurer et vérifier la pression des pneumatiques. Toutefois, il est possible d'envisager d'utiliser de tels transpondeurs 6 montés sur des roues 2 à d'autres fins, comme par exemple pour vérifier le degré d'usure des pneumatiques 4. Dans ce cas, chaque transpondeur 6 est relié à un témoin d'usure.

L'objet de la présente invention concerne plus particulièrement un procédé de vérification du bon fonctionnement du ou des transpondeurs 6 suite à la détection d'un franchissement d'un seuil de surchauffe déterminé. A cet effet, le système lecteur/transpondeur est adapté pour la mise en oeuvre de ce procédé. Pour cela, chaque transpondeur 6 est pourvu d'un capteur de température permettant la mesure de valeurs de température des pneumatiques. Ces valeurs de température sont ensuite transmises au lecteur 5 pour la détection du franchissement d'un seuil de surchauffe déterminé. Le lecteur est programmé pour effectuer une procédure de diagnostic ou procédé de vérification du bon fonctionnement d'un transpondeur quand il détecte le franchissement du seuil de surchauffe.

Afin de mieux comprendre les différentes variantes pour la mise en oeuvre de ce procédé de vérification, nous rappellerons brièvement qu'un transpondeur est composé de plusieurs éléments parmi lesquels on retrouve une antenne pour communiquer avec le lecteur, une logique interne pour traiter les commandes et au moins une mémoire non volatile pour stocker des données. Il est possible de classer tous les éléments constitutifs d'un transpondeur en deux catégories suivant que ces éléments sont sensibles ou peu sensibles aux variations de température et plus particulièrement aux températures élevées. Dans le cadre des technologies présentes, on entend par températures élevées, des températures de l'ordre de 125° C ou plus, toutefois on comprendra aisément que le seuil à partir duquel on considère un transpondeur en surchauffe dépend essentiellement de sa technologie et peut donc varier sensiblement suivant les matériaux utilisés. Ainsi, dans la catégorie des éléments peu sensibles aux températures élevées, on regroupera tous les éléments constituant la logique du transpondeur et l'antenne. Dans la catégorie des éléments sensibles aux températures élevées, on regroupera la mémoire non volatile ainsi que les capteurs s'ils sont intégrés dans le transpondeur ou encore des éléments du type d'un convertisseur analogique numérique.

La figure 2 est un diagramme d'une première variante de mise en oeuvre du procédé de vérification du bon fonctionnement d'un transpondeur monté sur une roue d'un véhicule. La première étape consiste à mesurer la température au niveau de la roue sur laquelle est montée le transpondeur. Pour cela des mesures sont effectuées au moyen du capteur de température également monté sur la roue. Ces mesures de température peuvent être effectuées de différentes manières. Une première solution consiste à effectuer des mesures périodiques, à raison par exemple d'une mesure par seconde. Une deuxième solution consiste à surveiller les variations de température et d'effectuer des mesures de température à une fréquence en fonction de l'importance des variations, plus les variations de température sont importantes, plus le système effectue des mesures de la température. Une troisième solution avantageuse consiste à effectuer des mesures de température lors de la détection d'un événement particulier, comme par exemple la détection d'un freinage d'urgence ou encore l'activation du système anti-blocage des roues ou du répartiteur électronique de freinage. Il est bien évident que toutes les alternatives sues présentées peuvent être combinées.

La mesure de température effectuée est comparée avec un seuil de surchauffe prédéfini Sₛ, par exemple 125°C. Si la mesure de température est supérieure au seuil de surchauffe (T> Sₛ), le lecteur entreprend alors une procédure de diagnostic pour vérifier que le transpondeur est encore opérationnel malgré l'échauffement subi par la roue sur lequel le transpondeur est monté. Pour assurer une vérification fiable, il apparaît donc judicieux de vérifier le bon fonctionnement d'un des éléments les plus sensibles pour s'assurer du bon fonctionnement de l'ensemble du transpondeur. Pour cela, le lecteur envoie une commande à l'un des éléments sensibles du transpondeur, puis vérifie la bonne exécution de cette commande. Si la commande est correctement effectuée, le transpondeur est opérationnel dans la mesure où les éléments peu sensibles aux températures élevées fonctionnent puisqu'ils ont permis le traitement de cette commande, mais surtout l'élément sensible aux températures élevées est fonctionnel puisque la commande a été exécutée correctement. Si la commande n'est pas effectuée correctement le transpondeur n'est donc pas opérationnel et le lecteur sait alors que les informations fournies par ce transpondeur ne sont fiables.

Dans le cadre de la présente invention, il a été constaté que l'élément le plus sensible du transpondeur susceptible d'avoir subi des dommages dus au franchissement du seuil de surchauffe était la mémoire non volatile, celle-là même qui contient toutes les informations relatives aux mesures effectuées au moyen des capteurs. De plus, la mémoire non volatile est facilement accessible par le biais des commandes traditionnelles d'écriture, d'effacement ou de lecture. C'est pourquoi, selon une variante avantageuse du procédé, il est prévu que le lecteur envoie une commande pour tester le bon fonctionnement de la mémoire non volatile du transpondeur. De manière astucieuse, il est prévu en particulier d'effectuer une commande de lecture de la mémoire non volatile, ce qui permet d'éviter la corruption possible des données qu'engendrerait une opération d'écriture ou d'effacement effectuée sur la mémoire. Toujours de manière astucieuse, il est prévu que cette opération de lecture soit dirigée sur une zone mémoire de stockage donnée dont le contenu est connu à l'avance de manière certaine par le lecteur, c'est pourquoi, il est avantageusement prévu de lire par exemple l'identifiant du transpondeur ou encore toute autre information stockée une fois pour toutes lors de la production du transpondeur. Ainsi, le lecteur peut contrôler en fonction de la réponse reçue ou de l'absence de réponse, si le transpondeur fonctionne correctement et ce de manière fiable. Avantageusement, le lecteur peut réaliser un diagnostic plus pointu selon que la réponse reçue est lisible ou ne l'est pas. Ainsi, si la réponse est lisible et correcte, le lecteur conclut que le transpondeur fonctionne normalement. Si la réponse est lisible mais incorrecte, le lecteur conclut que la logique du transpondeur fonctionne mais que le contenu de la mémoire est corrompu. Enfin, si la réponse est illisible ou en absence totale de réponse, le lecteur conclut que l'ensemble du transpondeur ne fonctionne plus correctement.

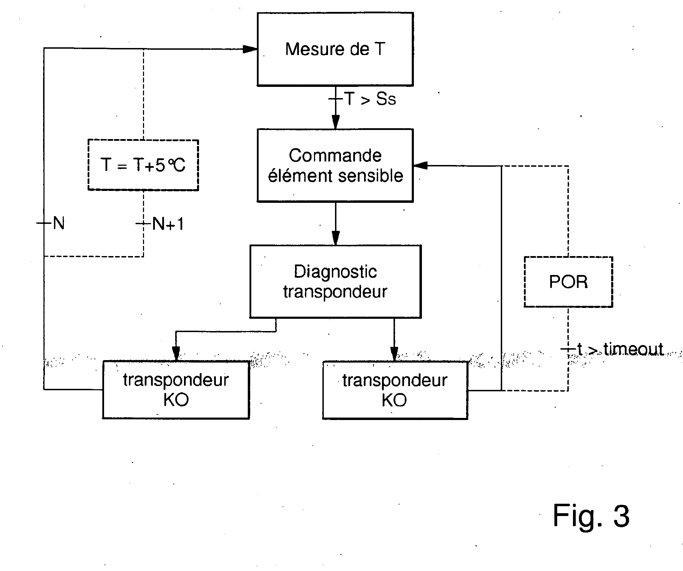

La figure 3 représente un diagramme des différentes étapes du procédé de vérification du transpondeur selon une deuxième variante de mise en oeuvre. Cette deuxième variante concerne notamment la récurrence de la procédure de diagnostic suivant les différents résultats possibles. On retrouve donc toutes les étapes décrites en relation avec la figure 2, parmi lesquelles la mesure de la température au moyen du capteur de température, la détection du franchissement d'un seuil de surchauffe, l'exécution d'une commande sur un élément sensible du transpondeur, de préférence une commande de lecture de l'identifiant stocké dans la mémoire non volatile du transpondeur, et la pose d'un diagnostic sur le bon fonctionnement du transpondeur en fonction de la réponse reçue ou absence de réponse. Toutes les alternatives décrites en liaison avec la figure 2 sont bien évidemment applicables dans le cadre de cette deuxième variante donnée en relation avec la figure 3.

Lorsque le diagnostic du transpondeur effectué par le lecteur mentionne que le transpondeur fonctionne correctement, le système effectue une nouvelle mesure de température pour s'assurer que la température est retombée sous le seuil de surchauffe. Si la température mesurée est encore supérieure au seuil de surchauffe, une nouvelle procédure de diagnostic est entreprise. Le système recommence alors la même procédure de diagnostic tant que la température n'est pas redescendue en dessous du seuil de surchauffe. Alternativement, selon une variante préférée, il est prévu de recommencer la procédure N fois avec de préférence N=3, puis si la température reste supérieure au seuil de surchauffe et que le transpondeur fonctionne toujours correctement alors le seuil de surchauffe est rehaussé à une valeur plus élevée, par exemple pour un seuil de surchauffe initial à 125°C, le seuil est rehaussé de 5°C pour le porter à 130°C, puis la procédure est réinitialisée avec une nouvelle mesure de température comparée avec le nouveau seuil de surchauffe.

Lorsque le diagnostic du transpondeur effectué par le lecteur mentionne que le transpondeur ne fonctionne pas correctement, soit que la mémoire est corrompue, soit que tout le transpondeur, logique et mémoire, ne fonctionne plus correctement, alors le lecteur effectue des nouvelles opérations de lecture tant que la réponse attendue n'est pas correcte. Si cette situation se prolonge, il est possible d'introduire un timeout, puis de couper l'alimentation, faire un power-on-reset, laisser reposer le tag, puis de recommencer la procédure.

On comprendra que diverses modifications et / ou améliorations évidentes pour l'homme du métier peuvent être apportées aux différentes variantes de mise en oeuvre du procédé de vérification du bon fonctionnement d'un transpondeur suite à la détection du franchissement d'un seuil de surchauffe décrites dans la présente description, et cela sans sortir du cadre de l'invention défini par les revendications annexées.

## Revendications

1. Procédé de vérification du bon fonctionnement d'un transpondeur monté sur un élément mobile en rotation d'un véhicule, ledit procédé comprenant les étapes préliminaires suivantes:
a) mesure d'une valeur de température au moyen d'un capteur de température relié au transpondeur;
b) détection du franchissement d'un seuil de surchauffe;
**caractérisé en ce que** ledit procédé comprend en outre, après les étapes a) et b), les étapes suivantes :
c) opération de contrôle réalisée par un lecteur agencé dans le véhicule et prévu pour communiquer avec le transpondeur consistant à exécuter une commande sur un des éléments sensibles à la température du transpondeur qui est une mémoire non volatile du transpondeur:
d) détermination par le lecteur de l'état du transpondeur en fonction de la réponse ou de l'absence de réponse à la commande à exécuter:
(i) si la réponse est correcte, le transpondeur est fonctionnel;
(ii) si la réponse est incorrecte ou en l'absence de réponse, le transpondeur n'est pas fonctionnel.

2. Procédé de vérification selon la revendication 1, **caractérisé en ce que** commande à exécuter est une opération de lecture de la mémoire non volatile.

3. Procédé de vérification selon la revendication 2, **caractérisé en ce que** l'opération de lecture est effectuée sur une zone mémoire dont le contenu ne varie pas et que le lecteur connaît.

4. Procédé de vérification selon l'une des revendications 1 à 3, **caractérisé en ce que** le lecteur distingue deux sous états de transpondeur non fonctionnel en fonction d'une réponse incorrecte ou de l'absence de réponse:
(ii.1) si la réponse est incorrecte mais lisible par le lecteur, la logique du transpondeur est fonctionnelle mais la mémoire non volatile est corrompue;
(ii.2) si la réponse est incorrecte et illisible par le lecteur ou en cas d'absence de réponse, la logique est non fonctionnelle et la mémoire non volatile est corrompue.

5. Procédé de vérification selon l'une des revendications 1 à 4, **caractérisé en ce qu'**en fonction de l'état du transpondeur diagnostiqué à l'étape d), le procédé comprend en outre les étapes suivantes
- si le transpondeur est fonctionnel (i), une nouvelle mesure de température a) est effectuée, et si la température est inférieure au seuil de surchauffe, le système lecteur / transpondeur retourne dans un mode de fonctionnement normal, tandis que si la température est toujours supérieure au seuil de surchauffe, les étapes c) et d) sont de nouveau effectuées;
- si le transpondeur n'est pas fonctionnel, les étapes c) et d) sont de nouveau effectuées.

6. Procédé de vérification selon la revendication 5, **caractérisé en ce qu'**il est prévu d'augmenter le seuil de surchauffe après trois occurrences de l'étape d) pour lesquelles le transpondeur est fonctionnel.

7. Procédé de vérification selon la revendication 5 ou 6, **caractérisé en ce qu'**il est prévu un timeout, pour arrêter la répétition des étapes c) et d) lorsque le transpondeur n'est pas fonctionnel, suivi d'une étape de remise à zéro et d'un temps de repos avant d'effectuer une nouvelle fois les étapes c) et d).

8. Procédure de vérification selon l'une quelconque des revendications précédentes, **caractérisé en ce que** l'étape a) de mesure de température est effectuée suite à la détection d'un freinage d'urgence, de l'activation du système anti-blocage des roues, ou de l'activation du répartiteur électronique de freinage du véhicule.

9. Système de contrôle de la pression des pneumatiques d'un véhicule automobile adapté pour la mise en oeuvre d'un procédé de vérification comportant un transpondeur muni d'un capteur de pression permettant de contrôler la pression du pneumatique associé à la roue sur laquelle est disposé le transpondeur,
**caractérisé en ce que** le lecteur est adapté, pour tester le bon fonctionnement de la mémoire non volatile du transpondeur afin de mettre en oeuvre le procédé de vérification selon l'une quelconque des revendications précédentes.

## Claims

1. Method of verifying the proper working of a transponder mounted on a rotating mobile element of a vehicle, said method comprising the preliminary following steps:
a) measurement of a temperature value by means of a temperature sensor linked to the transponder;
b) detection of a breach of a overheat threshold;
**characterized in that** sad method further comprises, after the steps a) and b), the followings steps
c) monitoring operation achieved by a reader arranged in the vehicle and provided to communicate with the transponder consisting in executing a command on one of the temperature sensitive elements of the transponder which is a non volatile memory of the transponder;
d) determination by the reader of the state of the transponder as a function of the response or absence of response to the command to be executed:
(i) if the response is correct, the transponder is operational;
(ii) if the response is incorrect or in the absence of any response, the transponder is not operational.

2. Verification method according to claim 1, **characterized in that** the command to be executed is a read operation of the non-volatile memory.

3. Verification method according to claim 2, **characterized in that** the read operation is carried out on a memory zone whose content does not vary and that the reader knows.

4. Verification method according to any of claims 1 to 3, **characterized in that** the reader distinguishes two sub-states of the non-operational transponder as a function of an incorrect response or the absence of any response:
(ii.1) If the response is incorrect but legible to the reader, the logic of the transponder is operational but the non-volatile memory is corrupted;
(ii.2) If the response is incorrect and illegible to the reader or in the absence of any response, the logic is non-operational and the non-volatile memory is corrupted.

5. Verification method according to any of claims 1 to 4, **characterized in that** as a function of the state of the transponder diagnosed at step d), the method further includes the following steps:
if the transponder is operational (i), a new temperature measurement a) is taken, and if the temperature is less than the overheat threshold, the reader/transponder system returns to a normal operating mode, whereas if the temperature is still higher than the overheat threshold, steps c) and d) are carried out again;
- if the transponder is non-operational, steps c) and d) are carried out again.

6. Verification method according to claim 5, **characterized in that** the overheat threshold is increased after three occurrences of step d) where the transponder is operational.

7. Verification method according to claim 5 or 6, **characterized in that** a timeout is provided, to stop the repetition of steps c) and d) when the transponder is not operational, followed by a reset step and a rest time prior to steps c) and d) being carried out again.

8. Verification method according to any of the preceding claims, **characterized in that** the temperature measurement step a) is carried out following detection of an emergency stop, activation of the wheel anti-locking system, or activation of the electronic braking distribution system of the vehicle.

9. Tyre pressure monitoring system for an automobile vehicle adapted to implement a verification method comprising a transponder provided with a pressure sensor for checking the pressure of the tyre associated with the wheel on which the transponder is arranged, **characterized in that** the reader is adapted to test the proper working of the non-volatile memory of the transponder in order to implement the verification method according to any of the preceding claims.

## Patentansprüche

1. Verfahren für die Prüfung der korrekten Funktion eines Transponders, der an einem rotatorisch beweglichen Element eines Fahrzeugs montiert ist, wobei das Verfahren die folgenden vorhergehenden Schritte umfasst:
a) Messen eines Temperaturwerts mittels eines mit dem Transponder verbundenen Temperatursensors;
b) Detektieren des Überschreitens eines Überhitzungsschwellenwerts; **dadurch gekennzeichnet, dass** das Verfahren außerdem nach den Schritten a) und b) die folgenden Schritte umfasst:
c) Ausführen einer Kontrolle, die durch eine im Fahrzeug angeordnete Leseeinrichtung, die dazu vorgesehen ist, mit dem Transponder zu kommunizieren, ausgeführt wird und darin besteht, eine Steuerung an einem der temperaturempfindlichen Elemente des Transponders auszuführen, das ein nichtflüchtiger Speicher des Transponders ist;
d) Bestimmen des Zustands des Transponders durch die Leseeinrichtung gemäß der Antwort oder des Fehlens einer Antwort auf die auszuführende Steuerung:
(i) falls die Antwort korrekt ist, ist der Transponder funktionsfähig;
(ii) falls die Antwort nicht korrekt ist oder falls keine Antwort vorliegt, ist der Transponder nicht funktionsfähig.

2. Prüfungsverfahren nach Anspruch 1, **dadurch gekennzeichnet, dass** die auszuführende Steuerung eine Operation des Lesens des nichtflüchtigen Speichers ist.

3. Prüfungsverfahren nach Anspruch 2, **dadurch gekennzeichnet, dass** die Leseoperation in einer Speicherzone ausgeführt wird, deren Inhalt sich nicht verändert und die die Leseeinrichtung kennt.

4. Prüfungsverfahren nach einem der Ansprüche 1 bis 3, **dadurch gekennzeichnet, dass** die Leseeinrichtung zwei Unterzustände des nicht funktionsfähigen Transponders entsprechend einer nicht korrekten Antwort oder des Fehlens einer Antwort unterscheidet:
(ii.1) falls die Antwort nicht korrekt ist, jedoch durch die Leseeinrichtung lesbar, ist die Logik des Transponders funktionsfähig, der nichtflüchtige Speicher ist jedoch beschädigt;
(ii.2) falls die Antwort nicht korrekt ist und von der Leseeinrichtung nicht gelesen werden kann oder falls keine Antwort vorhanden ist, ist die Logik nicht funktionsfähig und ist der nichtflüchtige Speicher beschädigt.

5. Prüfungsverfahren nach einem der Ansprüche 1 bis 4, **dadurch gekennzeichnet, dass** das Verfahren als Funktion des im Schritt d) diagnostizierten Zustands des Transponders außerdem die folgenden Schritte umfasst:
falls der Transponder funktionsfähig ist (i), erfolgt eine neue Messung der Temperatur a) und falls die Temperatur kleiner als der Überhitzungsschwellenwert ist, kehrt das System aus Leseeinrichtung und Transponder in eine normale Betriebsart zurück, während dann, wenn die Temperatur noch immer höher als der Überhitzungsschwellenwert ist, die Schritte c) und d) erneut ausgeführt werden;
falls der Transponder nicht funktionsfähig ist, werden die Schritte c) und d) erneut ausgeführt.

6. Prüfungsverfahren nach Anspruch 5, **dadurch gekennzeichnet, dass** vorgesehen ist, den Überhitzungsschwellenwert nach drei Auftritten des Schrittes d), in denen der Transponder funktionsfähig ist, zu erhöhen.

7. Prüfungsverfahren nach Anspruch 5 oder 6, **dadurch gekennzeichnet, dass** ein Timeout vorgesehen ist, um die Wiederholung der Schritte c) und d) anzuhalten, wenn der Transponder nicht funktionsfähig ist, gefolgt von einem Schritt des Rücksetzens auf null und von einer Ruhezeit, bevor die Schritte c) und d) erneut ausgeführt werden.

8. Prüfungsprozedur nach einem der vorhergehenden Ansprüche, **dadurch gekennzeichnet, dass** der Schritt a) des Messens der Temperatur nach der Detektion einer Notbremsung, der Aktivierung des Antiblockiersystems der Räder oder der Aktivierung des elektronischen Bremsverteilers des Fahrzeugs ausgeführt wird.

9. System zur Kontrolle des Drucks von Reifen eines Kraftfahrzeugs, das für die Ausführung eines Prüfungsverfahrens ausgelegt ist und einen Transponder umfasst, der mit einem Drucksensor versehen ist, der die Kontrolle des Drucks des dem Rad zugeordneten Reifens, an dem der Transponder angeordnet ist, ermöglicht,
**dadurch gekennzeichnet, dass** die Leseeinrichtung dazu ausgelegt ist, die korrekte Funktion des nichtflüchtigen Speichers des Transponders zu prüfen, um das Prüfungsverfahren nach einem der vorhergehenden Ansprüche auszuführen.
